# EUROPEAN PATENT APPLICATION

(11) **EP 2 423 834 A1**
(43) Date of publication of application: **29.02.2012**
(21) Application number: 11178402.1
(22) Date of filing: 23.08.2011
(51) Int. Cl.: G06F 17/30

(54) **Method for providing search service and temporarily storing search results and display apparatus applying the same**

(30) Priority: 31.08.2010 KR 20100085097
(71) Applicant: SAMSUNG ELECTRONICS CO., LTD., Suwon-si, Gyeonggi-do (KR)
(72) Inventor: Chung, Ji-hye, Seoul (KR); Lim, Eun-young, Seoul (KR); Yang, Ji-sun, Incheon (KR); Yeo, Sin-oug, Seoul (KR); Lee, Hye-jeong, Seoul (KR); Kim Min-jin, Gyeonggi-do (KR)
(74) Representative: Hewett, Jonathan Michael Richard

(57) **Abstract**

A search service providing method and a display apparatus applying the same are provided. In response to a user selecting a particular item of search result items displayed in a second region, the search service providing method displays the selected search result item in a third region so that the user can display and temporary store his/her intended search result in a separate region. Thus, the user can select and access the temporarily stored search result items displayed in the third region, without having to search previous sites repeatedly.

## Description

The present invention relates to a search service and a display using the search service. More particularly, the present invention relates to a method for providing an Internet search service in a display apparatus, and the display apparatus using the same.

Recently, TVs can not only receive broadcasts but also provide various services via Internet. For example, an IPTV can execute applications such as a widget, by connecting to the Internet.

The TV, which is equipped with a web browser, may provide an Internet service. To access the web browser, a user needs to execute the web browser by pressing a particular button of a remote controller or by using a menu.

However, when the user uses the Internet through the TV, he/she cannot focus on a TV screen because the Internet web browser blocks the TV screen. Also, since the TV lacks user interfaces required to use the Internet web browser, the user may have a difficulty in using the web browser via the TV.

In particular, to search the previous results repeatedly, the user needs to repeat the same manipulation.

The user demands a display apparatus for facilitating the search service even more when using the web browser. To respond to this, what is needed is a method for allowing the user to search with ease.

Embodiments of the present invention have been made to address the above-mentioned and other problems and disadvantages occurring in the conventional arrangement, and an exemplary embodiment provides a search service and a method for displaying a particular search result item, which is selected by a user among search result items displayed in a second region, in a third region, and a display apparatus using the same.

According to an exemplary embodiment, a method for providing a search service includes displaying a search window including a second region and a third region; searching for information relating to an input search keyword; displaying a preset number of search result items corresponding to the input search keyword in the second region; and responsive to a particular item being selected from among the search result items displayed in the second region, displaying the selected item in the third region.

The search window may further include a first region where the search keyword is input.

The method may further include storing information relating to the selected item displayed in the third region.

The information relating to the selected item displayed in the third region may include at least one of a search keyword, a site name, a site address, and a site description.

The storing may sustain the stored information relating to the selected item displayed in the third region until a power is switched off.

The selected item displayed in the third region may be displayed together with the search keyword used for searching the selected item.

The method may further include assigning numbers to the search result items displayed in the second region respectively; and in response to the user inputting a number input command, selecting a search result item from among the search result items corresponding to the input number.

The method may further include displaying the search window including a keyword list in response to the search window being initiated.

Respective keywords in the keyword list may be assigned numbers, and the method may further include selecting a keyword from the keyword list corresponding to the input number if the user inputs a number input command.

According to another exemplary embodiment, a display apparatus includes a display unit which displays a search window which includes a second region and a third region; and a controller which searches for information relating to an input search keyword, controls to display a preset number of search result items corresponding to the input search keyword in the second region, and in response to a particular item being selected from among the search result items displayed in the second region, controls to display the selected search result item in the third region.

The search window may further include a first region where the search keyword is input.

The controller may control to store information relating to the selected item displayed in the third region.

The information relating to the selected item displayed in the third region may include at least one of a search keyword, a site name, a site address, and a site description.

The controller may sustain the stored information relating to the selected item displayed in the third region until a power off.

The controller may control to display the selected item displayed in the third region together with the search keyword used for the searching the selected item.

The controller may assign numbers to the search result items displayed in the second region respectively, and in response to the user inputting a number input command, the controller may select a search result item from among the search result items corresponding to the input number.

If the search window is initiated, the controller may control to display the search window including a keyword list.

The keyword list may be assigned numbers for respective keywords, and in response to the user inputting a number input command, the controller may select a keyword from the keyword list corresponding to the input number.

According to another exemplary embodiment a computer-readable storage medium embodied with computer-readable instructions for enabling a computer to execute a method for providing a search service is provided.

According to another exemplary embodiment, a method for providing a search service is provided. The method includes initiating display of a keyword list including a plurality of keywords in response to a request by a user to initiate a search window; receiving an input specifying a keyword selected from the keyword list; and searching for information corresponding to the selected keyword.

The initiating display of a keyword list may include displaying a keyword rank list and a latest keyword list.

Further, the method may include displaying the selected keyword in a first region of the search window in response to receiving the input specifying the selected keyword.

According to various exemplary embodiments, the search service providing method for displaying a particular search result item, which is selected by a user among search result items displayed in the second region, in a third region, and the display apparatus using the same are provided. Hence, the user can display and temporarily store his/her intended search result in a separate region. Therefore, the user can select and access the temporarily saved items displayed in the third region, without having to search the previous sites repeatedly.

The above and/or other aspects will become more apparent and more readily appreciated from the following description of exemplary embodiments thereof, with reference to the accompanying drawings, in which:
FIG. 1 is a block diagram of a TV according to an exemplary embodiment;
FIG. 2 is a flowchart of a search service providing method according to an exemplary embodiment;
FIGS. 3A through 3D illustrate search window configuration and temporary save item setting according to an exemplary embodiment;
FIG. 4 illustrates a search window configuration according to another exemplary embodiment;
FIGS. 5A and 5B illustrate a screen displaying a keyword list in the search window and a keyword selection from the displayed keyword list according to an exemplary embodiment;
FIG. 6 illustrates another search window according to an exemplary embodiment; and
FIGS. 7A, 7B and 7C illustrate a process for adding search result items to a third region and selecting an intended search result item according to an exemplary embodiment.

Certain exemplary embodiments will now be described in greater detail with reference to the accompanying drawings.

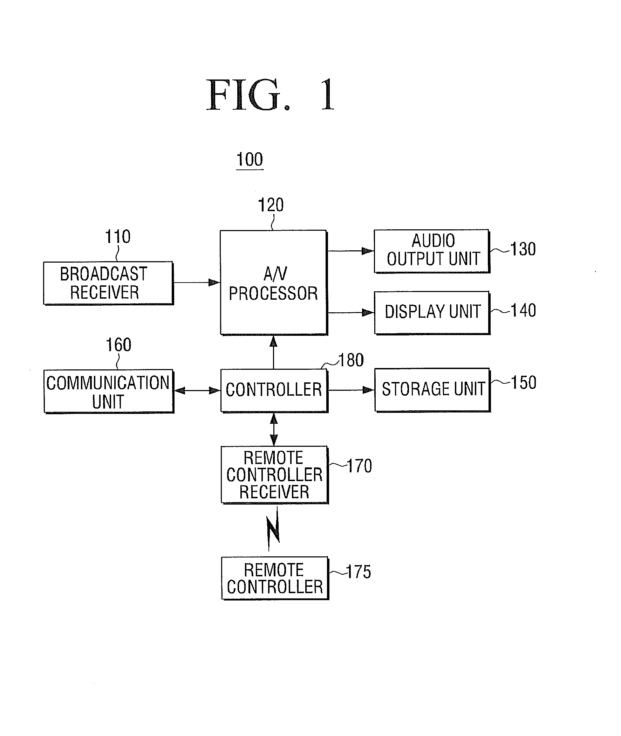

In the following description, same drawing reference numerals are used to refer to the same elements, even in different drawings. The matters defined in the following description, such as detailed construction and element descriptions, are provided as examples to assist in a comprehensive understanding of the invention. Also, well-known functions or constructions are not described in detail, since they would obscure the description of the exemplary embodiments with unnecessary detail. FIG. 1 is a detailed block diagram of a TV 100 according to an exemplary embodiment. As shown in FIG. 1, the TV 100 includes a broadcast receiver 110, an A/V processor 120, an audio output unit 130, a display unit 140, a storage unit 150, a communication unit 160, a remote controller receiver 170, and a controller 180.

The broadcast receiver 110 demodulates broadcast signals received from a broadcasting station or a satellite by wire or by radio. The broadcast receiver 110 may receive broadcast information.

The broadcast receiver 110 splits the received signal to a video signal and an audio signal. The broadcast receiver 110 sends the video signal and the audio signal to the A/V processor 120.

The A/V processor 120 applies signal processing, such as video decoding, video scaling, and audio decoding, to the video signal and the audio signal input from the broadcast receiver 110. The A/V processor 120 outputs the video signal to the display unit 140 and the audio signal to the audio output unit 130.

The audio output unit 130 outputs the audio fed from the A/V processor 120 through a speaker, or outputs the audio to an external device (for example, an external speaker) connected through an external output port.

The display unit 140 displays the video output from the A/V processor 120 in a display. That is, the display unit 140 displays the broadcast video corresponding to the broadcast signal.

The display unit 140 also displays a search window. Herein, the search window corresponds to a web browser or an application for searching for information or sites corresponding to a keyword input by a user. The search window functions to search for information using various Internet sites and the Internet and to display search results.

The search window includes a first region for inputting a search keyword, a second region for displaying a preset number of the searched result items per page, and a third region for displaying a search result item selected by the user.

The first region displays the search keyword input by the user. The search keyword may be input by the user through an input device (for example, remote controller, keyboard, touch screen, etc.)

The second region displays the search result items corresponding to the keyword input by the user. In particular, the second region displays a preset number of the search result items. The second region is implemented to display the search result items such that the user can turn over pages.

The third region displays temporary save items corresponding to the search result items selected by the user, as temporary save icons. That is, the temporary save items displayed in the third region correspond to items temporarily stored by the user for future re-accesses. The temporary save items displayed in the third region are temporarily stored to the storage unit 150. Hence, even when the user inputs a different search keyword and the search result items displayed in the second region alter, the temporary save items displayed in the third region are sustained. The temporary save items displayed in the third region may be changed by the user's manipulation.

Information relating to the temporary save items displayed in the third region is continuously stored until the TV 100 is turned off. Note that the user can select how long the information is temporarily stored.

The information relating to the temporary save item includes at least one of the search keyword, a site name, a site address, and a site description. The search keyword is displayed with the temporary save icon in the third region. Thus, the user can easily perceive which keyword is used to search the temporary save item. While the search window displays the first region together with the second region and the third region in this exemplary embodiment, only the second region and the third region, excluding the first region, can also be displayed. In such a case, the first region may be displayed in a separate window.

The storage unit 150 stores various programs for the operations of the TV 100. The storage unit 150 stores the information relating to the temporary save item displayed in the third region. The storage unit 150 can be implemented using a hard disc, a non-volatile memory, and a volatile memory.

The communication unit 160 communicably connects the TV 100 to a communication network such as Internet. In detail, the communication unit 160 is connected to a search engine server which provides the Internet search service over the communication network such as Internet. The communication unit 160 sends the input keyword to the search engine server, and receives search results corresponding to the keyword from the server.

The remote controller receiver 170 receives and forwards instructions from a remote controller 175 to the controller 180. For example, the remote controller receiver 170 receives from the remote controller 175, a search window display instruction, a search keyword input manipulation, a search instruction, a temporary save instruction, a search result select instruction, and so on.

The controller 180 obtains a user command based on the user's manipulation fed from the remote controller 175, and controls the operations of the TV 100 according to the obtained user command.

When the search instruction is input, the controller 180 searches for information relating to the search keyword input in the first region of the search window. In detail, the controller 180 accesses the search engine server through the communication unit 160, and requests the search engine server to search for the information relating to the search keyword. Next, the controller 180 receives the information relating the search keyword from the search engine server through the communication unit 160.

The controller 180 controls to display a preset number of the search result items per page in the second region. When the user selects a particular item of the search result items displayed in the second region, the controller 180 controls to display the selected search result item in the third region. That is, the controller 180 sets the item selected by the user as a temporary save item.

The controller 180 controls to store the information of the temporary save item displayed in the third region, to the storage unit 150.

The controller 180 sustains the stored information of the item displayed in the third region until the power is switched off. Hence, the user can access the stored information of the item displayed in the third region anytime before the power off. However, the length of time for which the information is saved can be set to a plurality of time lengths, besides the power off.

The controller 180 controls to display the search keyword used for the search together with the item displayed in the third region. Hence, the user can easily obtain which keyword each item displayed in the third region corresponds to.

The controller 180 assigns numbers to the search result items displayed in the second region. When the user inputs a number input command, the controller 180 selects the search result item corresponding to the input number.

As such, the user can select his/her intended item of the search result items using the number key.

When the search window is initiated, the controller 180 may also control to display the search window including a keyword list. Herein, the keyword list may include keywords in descending order of the search frequency by taking account of a search history of the user. When the user selects a keyword in the keyword list, the controller 180 may display the selected keyword in the first region.

Further, the controller 180 may allocate numbers to the keywords of the keyword list. When the user inputs the number input command, the controller 180 selects the keyword corresponding to the input number.

Hence, the user can easily select his/her intended keyword in the keyword list using the number key of the remote controller 175.

As such, the TV 100 displays the temporary save item of the search result items in the third region. Hence, the user can temporarily store his/her intended search result items in the third region and re-access them easily if necessary.

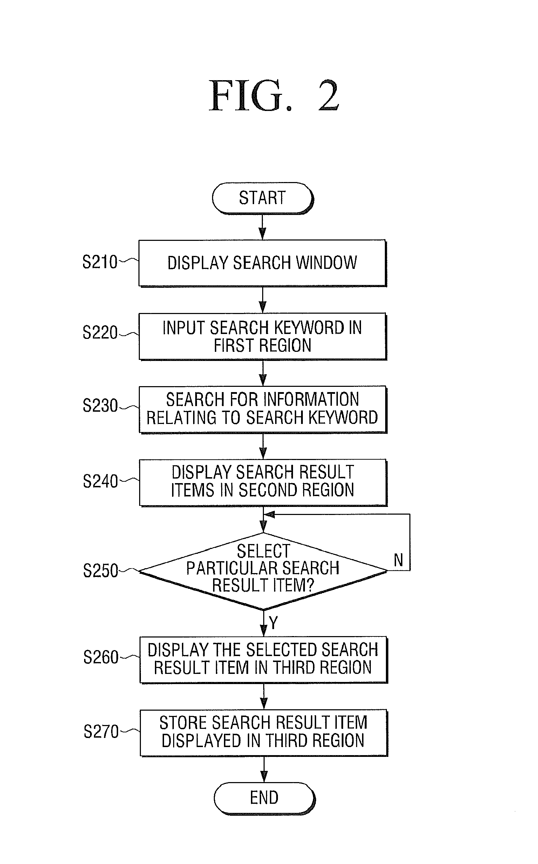

Now, a search service providing method for displaying the temporary save item in the third region is explained by referring to FIG. 2. FIG. 2 is a flowchart of the search service providing method according to an exemplary embodiment.

When the user inputs the search window display command, the TV 100 displays the search window in the screen (S210). Next, the TV 100 inputs the search keyword in the first region of the search region according to the user's manipulation (S220).

When the search instruction is input, the TV 100 searches for information relating to the search keyword input in the first region of the search window (S230). In more detail, the TV 100 accesses the search engine server through the communication unit 160, and requests the search engine server to search for the information relating to the search keyword. Next, the TV 100 receives the information relating the search keyword from the search engine server through the communication unit 160.

The TV 100 displays a preset number of the search result items per page in the second region of the search window (S240).

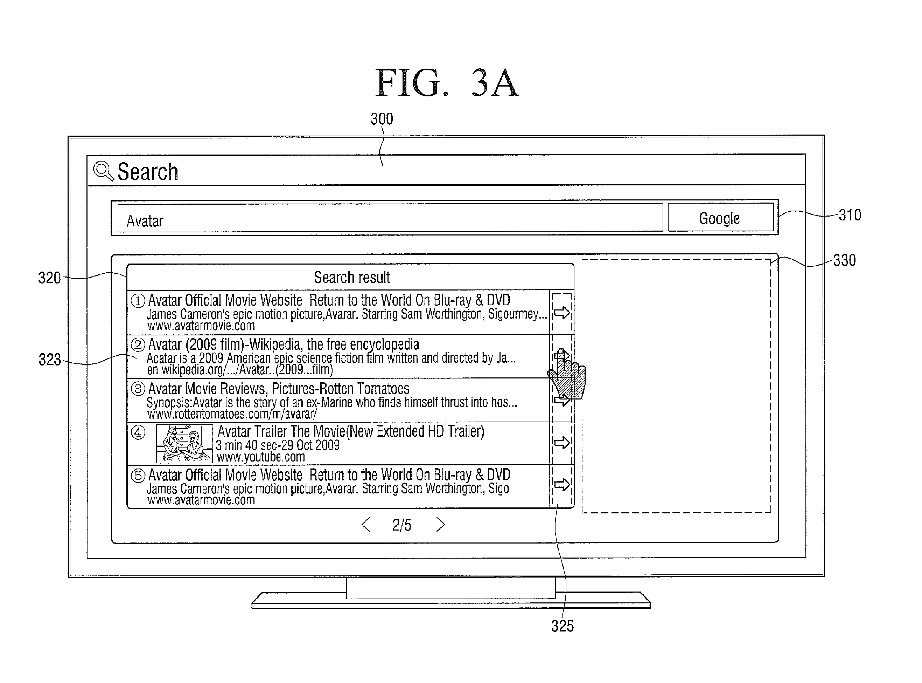

Next, the TV 100 determines whether a particular search result item is selected (S250). Herein, the selection indicates the manipulation for selecting and registering the particular search result item as the temporary save item. For example, the selection manipulation may select the temporary save setting icon corresponding to the particular search result item, which shall be described in detail by referring to FIGS. 3A through 3D.

When the particular search result item is selected as the temporary save item, the TV 100 displays the selected particular search result item in the third region (S260). The TV 100 stores the search result item displayed in the third region (S270). In particular, the TV 100 sets and stores the selected particular search result item as the temporary save item.

At this time, the TV 100 sustains the stored information of the item displayed in the third region until the power is turned off. Hence, the user can access the stored information of the item displayed in the third region until the power is turned off. However, the length of time for which the information is saved can be set to a plurality of time lengths, besides the power off.

The TV 100 may display the search keyword used for the search together with the item displayed in the third region. Hence, the user can easily obtain which keyword each item displayed in the third region corresponds to.

The TV 100 may assign numbers to the search result items displayed in the second region. When the user inputs a number input command, the TV 100 may select the search result item corresponding to the input number.

Hence, the user can select his/her intended item of the search result items using the number key of the remote controller 175.

When the search window is initiated, the TV 100 may display the search window including a keyword list. Herein, the keyword list includes the keywords in descending order of the search frequency by taking account of the search history of the user. When the user selects a keyword in the keyword list, the TV 100 displays the selected keyword in the first region.

Further, the TV 100 may allocate numbers to the keywords of the keyword list. When the user inputs the number input command, the TV 100 may select the keyword from the keyword list corresponding to the input number.

Hence, the user can easily select his/her intended keyword in the keyword list using the number key of the remote controller 175.

As such, the TV 100 displays the temporary save item of the search result items in the third region. Thus, the user can temporarily store his/her intended search result items in the third region and re-access them easily if necessary.

It should be noted that each of the steps 210 thru 270 may be performed by the controller 180 for the TV 100.

FIGS. 3A through 3D illustrate search window configuration and the temporary save item setting according to an exemplary embodiment. As shown in FIG. 3A, the search window 300 includes the first region 310, the second region 320, and the third region 330.

The first region 310 displays the search keyword input by the user. The search keyword may be input by the user through an input device (for example, remote controller, keyboard, touch screen, etc.)

The second region 320 displays the search result items corresponding to the keyword input by the user. In particular, the second region 320 displays a preset number of the search result items. The second region 320 is implemented to display the search result items such that the user can turn over pages. Five search result times are exemplarily displayed each time in FIG. 3A. Exemplarily, in FIG. 3A, the search result items of the second region 320 span over five pages.

A temporary save setting icon 325 is displayed for each individual item in the second region 320. The temporary save setting icon 325 is an icon for inputting an instruction to set the corresponding search result item as the temporary save item.

The third region 330 displays the temporary save items selected by the user, as the temporary save icons. That is, the temporary save items displayed in the third region 330 correspond to items temporarily stored by the user for future re-accesses. The temporary save items displayed in the third region 330 are temporarily stored to the storage unit 150. Hence, even when the user inputs a different search keyword and the search result items displayed in the second region 320 alter, the temporary save items displayed in the third region 330 are sustained. The temporary save items displayed in the third region 330 may be changed by the user's manipulation.

Information relating to the temporary save items displayed in the third region 330 is continuously stored until the TV 100 is turned off. Note that the user can select how long the information is temporarily stored.

The information relating to the temporary save item includes at least one of the search keyword, the site name, the site address, and the site description. The search keyword may also be displayed with the temporary save item in the third region 330. Thus, the user can easily perceive which keyword is used to search the temporary save item.

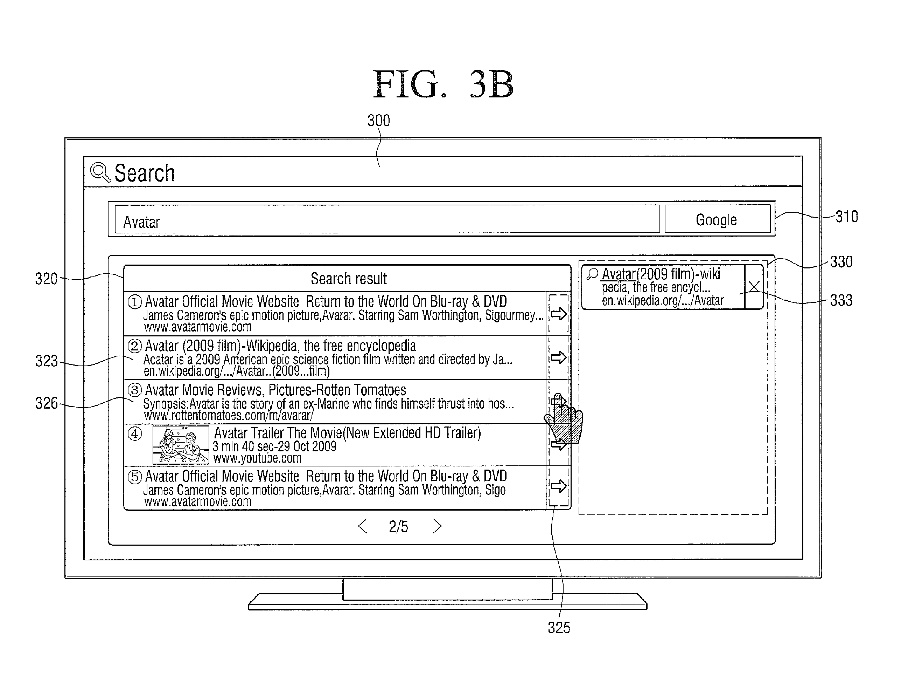

When the user selects the temporary save setting icon 325 corresponding to a second search result item 323 as shown in FIG. 3A, the TV 100 sets the second search result item 323 as the temporary save item. The TV 100 generate a first temporary save icon 333 corresponding to the second search result item 323 in the third region 330 as shown in FIG. 3B.

As shown in FIG. 3B, the first temporary save icon 333 displays a site name, a site description, a site URL, and a keyword. In particular, the keyword (i.e., 'avatar') is displayed by underlining the site title. As such, the keyword can be underlined and displayed.

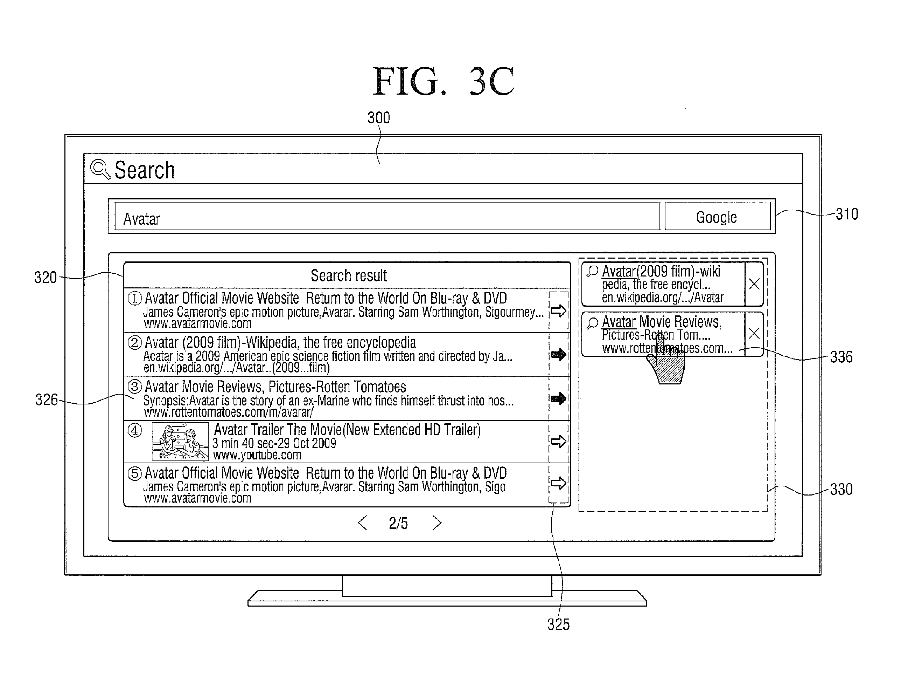

At this time, when the user selects a temporary save setting icon corresponding to a third search result item 326 as shown in FIG. 3B, the TV 100 sets the third search result item 326 as another temporary save item. The TV 100 generates a second temporary save icon 336 corresponding to the third search result item 326 in the third region 330 as shown in FIG. 3C.

As shown in FIG. 3C, the second temporary save icon 336 also displays the site name, the site description, the site URL, and the keyword. In particular, the keyword (i.e., 'avatar') is displayed by underlining the site title. As such, the keyword can be underlined and displayed.

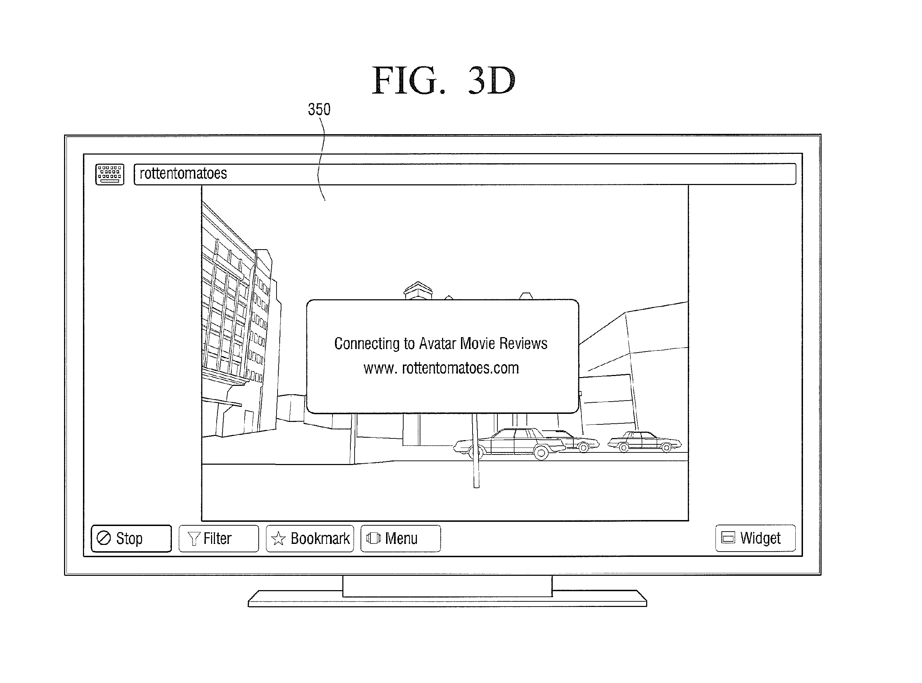

Further, if the user selects the second temporary save icon 336 as shown in FIG. 3C, the TV 100 displays a screen 350 of the site (i.e., the site corresponding to the third search result item 326) corresponding to the second temporary save icon 336 as shown in FIG. 3D.

As described above, the TV 100 temporarily stores the user's intended search result item and displays the temporary save items in the third region of the search window.

It should be noted that each of the functions described above with respect to FIGS. 3A thru 3D may be controlled by the controller 180.

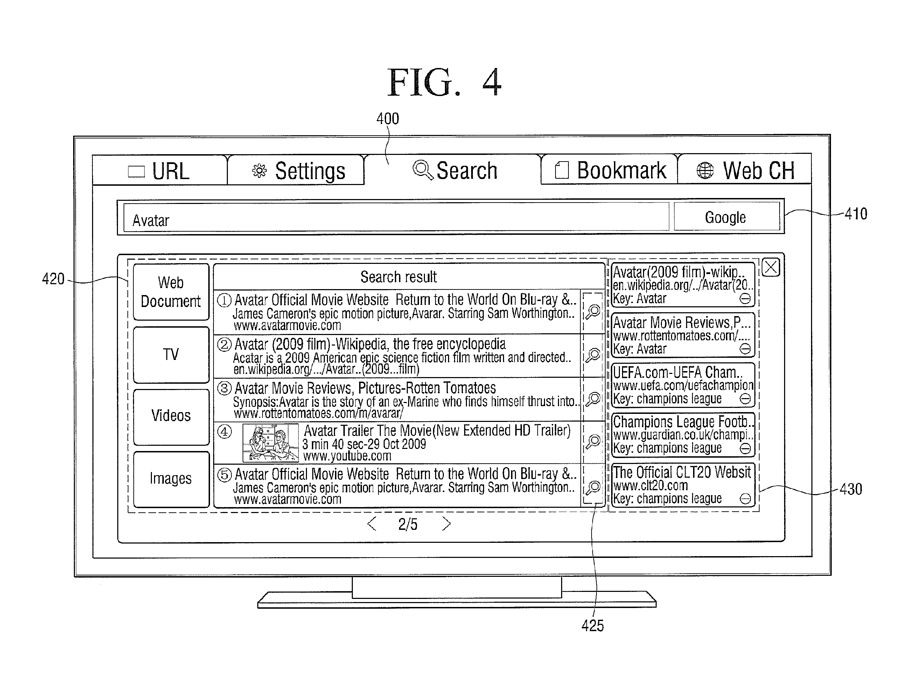

FIG. 4 illustrates a search window 400 according to another exemplary embodiment. The search window 400 of FIG. 4 is partially different from the search windows 300 of FIGS. 3A through 3D merely in the form, but has the same basic functions.

As shown in FIG. 4, the search window 400 includes a first region 410, a second region 420, and a third region 430. The first region 410, the second region 420, and the third region 430 have similar functions as stated above for the first region 310, the second region 320, and the third region 330. The temporary save setting icon 425 in the second region 420 also carries out a similar function as temporary save setting icon 325.

Notably, the temporary save icons displayed in the third region 430 of the search window 400 of FIG. 4 display the keyword separately. By displaying the keyword on the temporary save icons separately, the TV 100 can display the keyword of each temporary save icon more specifically.

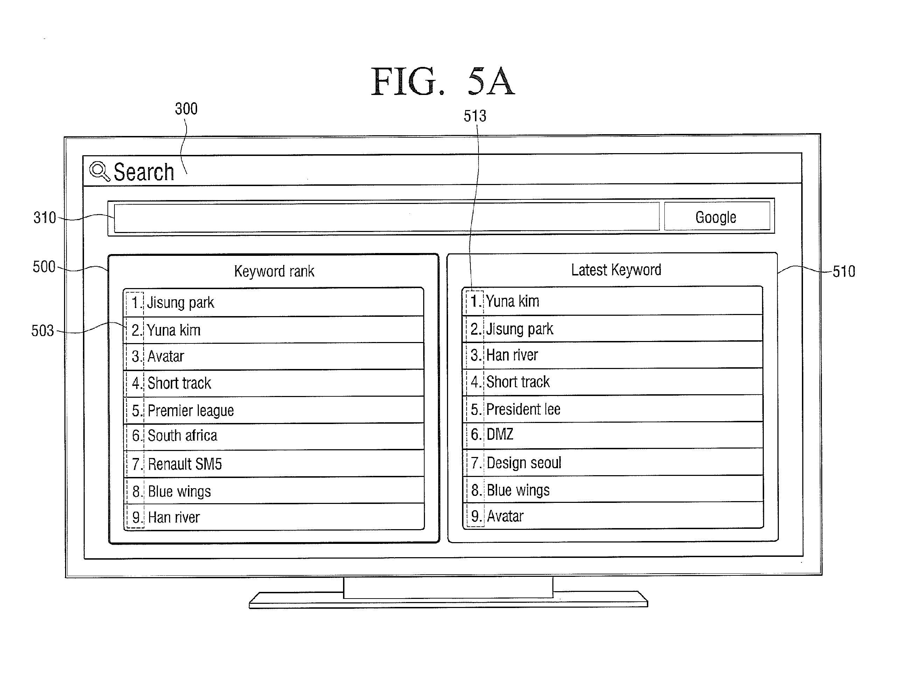

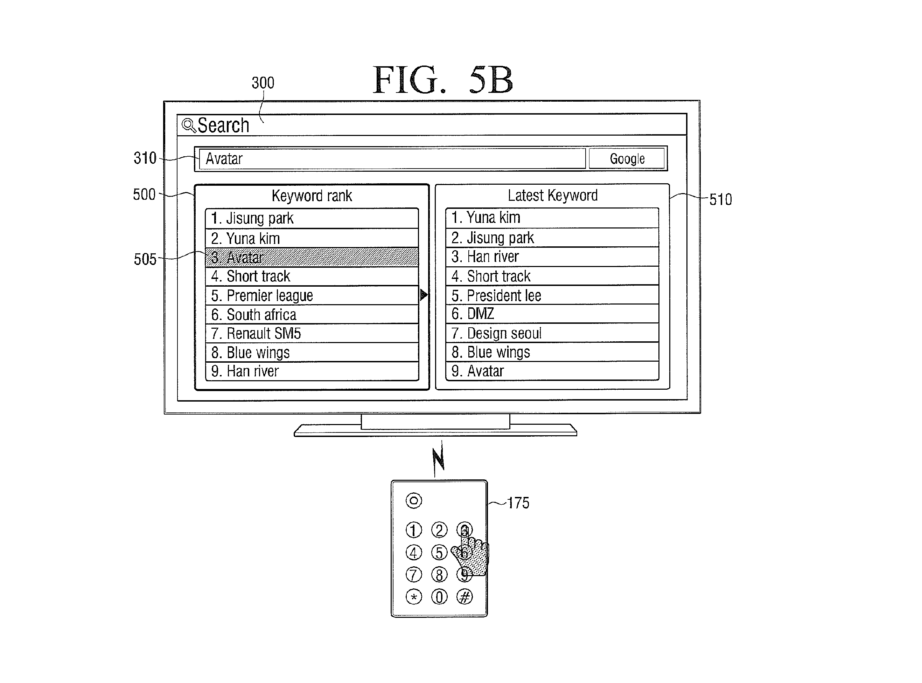

FIGS. 5A and 5B illustrate the screen displaying the keyword list in the search window and the keyword selection according to an exemplary embodiment.

FIG. 5A depicts the keyword lists displayed when the user initiates the search window 300. The search window 300 displays a keyword rank list 500 and a latest keyword list 510. Exemplarily, the controller 180 may control or initiate display of the keyword lists in response to a user initiating the search window.

The keyword rank list 500 enumerates the rank of the hottest keywords used in previous searches. The TV 100 can also receive the keyword rank information from various portal sites by searching the internet. The keywords in the keyword rank list 500 are assigned the numbers 503 corresponding to their rank. The assigned numbers are used to not only indicate the rank but to facilitate selection of the keyword by the user.

The latest keyword list 510 enumerates the keywords searched by the user most recently in order. The keywords in the latest keyword list 510 are assigned the numbers 513 corresponding to their latest order. The assigned numbers are used to not only indicate the order of the search but also select the keyword by the user.

By selecting the intended keyword list in the keyword rank list 500 and the latest keyword list 510, the user can select a keyword.

The keyword rank list 500 is highlighted (boundary is darkened) in FIG. 5A, which implies that the keyword rank list 500 is selected.

In this case, when the user presses the number key #3 of the remote controller 175, the TV 100 selects the keyword #3 505 of the keyword rank list 500 as shown in FIG. 5B. For example, the keyword 'Avatar' corresponding to the keyword #3 505 is input to the first region 310 as shown in FIG. 5B. Exemplarily, the controller 180 may control input of the selected keyword to the first region 310.

As such, the TV 100 may allocate a number to each item of the keyword list and select the keyword according to the user's number selection manipulation. Hence, the user can select the keyword using the remote controller 175 more conveniently.

Further, a search may be performed by the controller 180 for the input keyword.

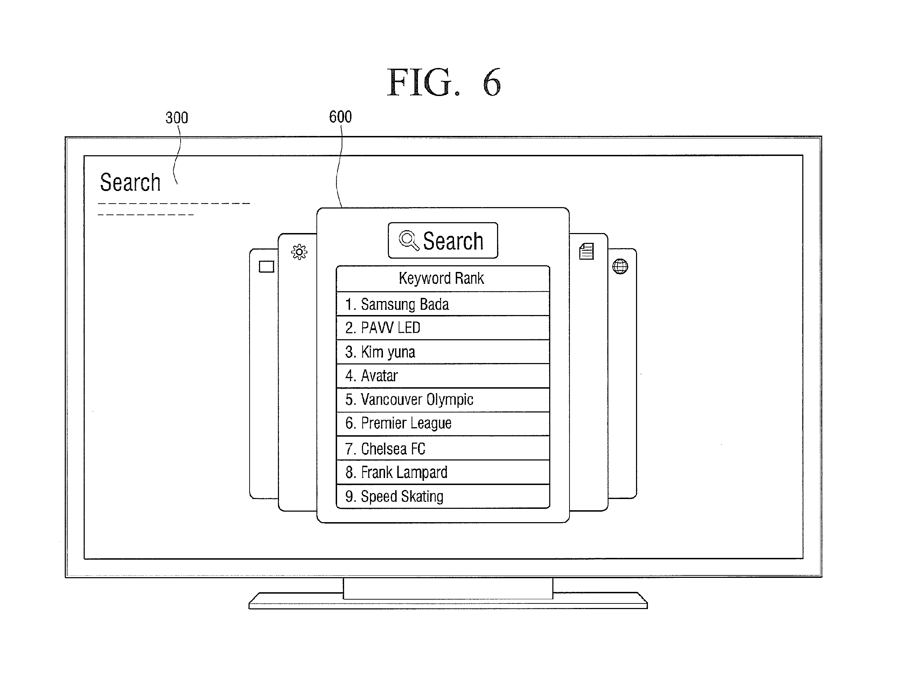

FIG. 6 illustrates a search window 600 according to yet another exemplary embodiment. When the search window 600 is initiated, it may display only a keyword list as shown in FIG. 6. Once the user selects a keyword in the search window, the TV 100 may then display the search window of FIGS. 3A through 4.

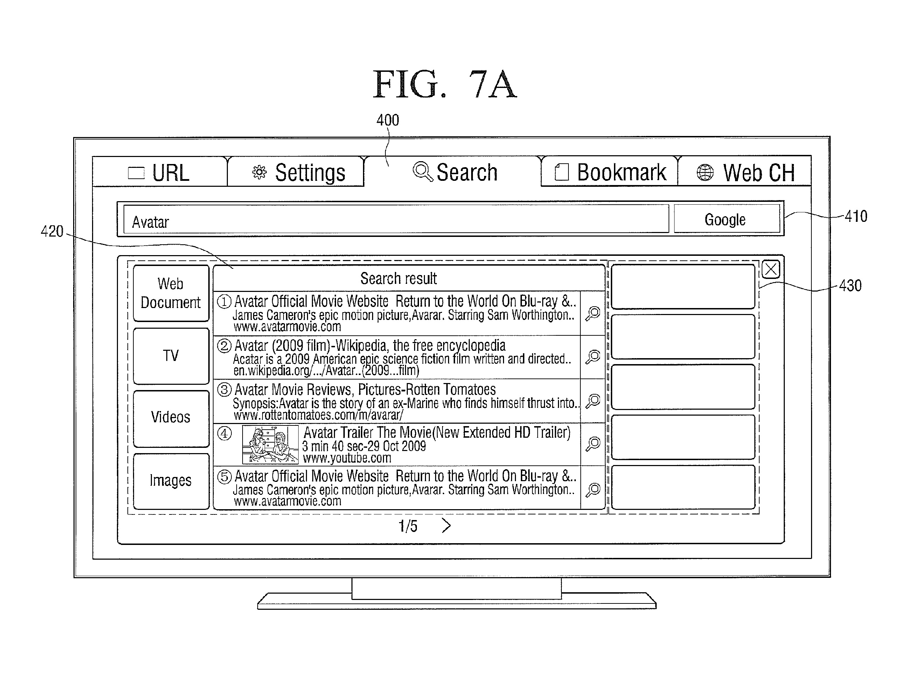

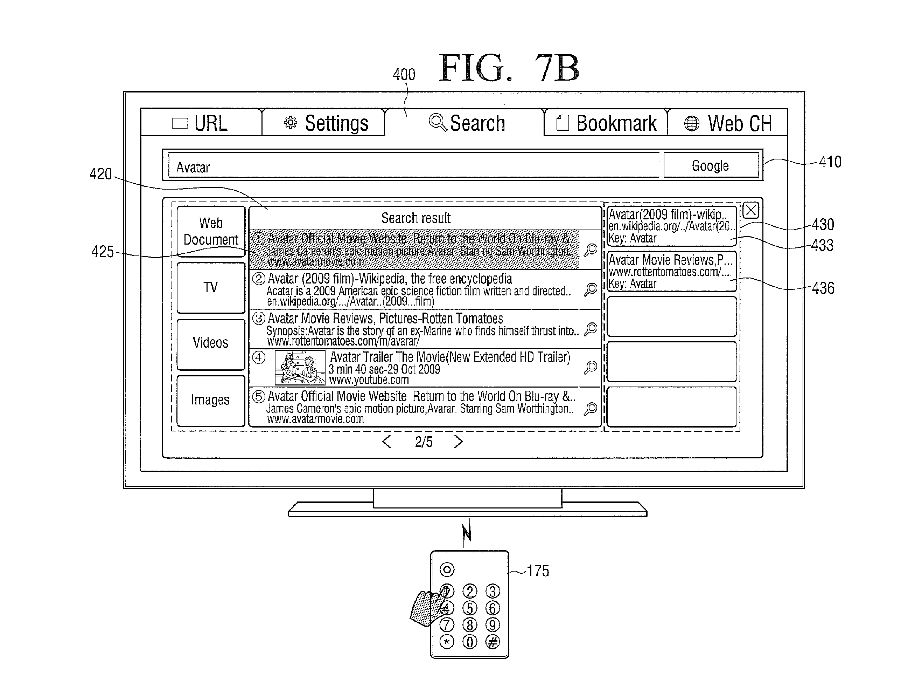

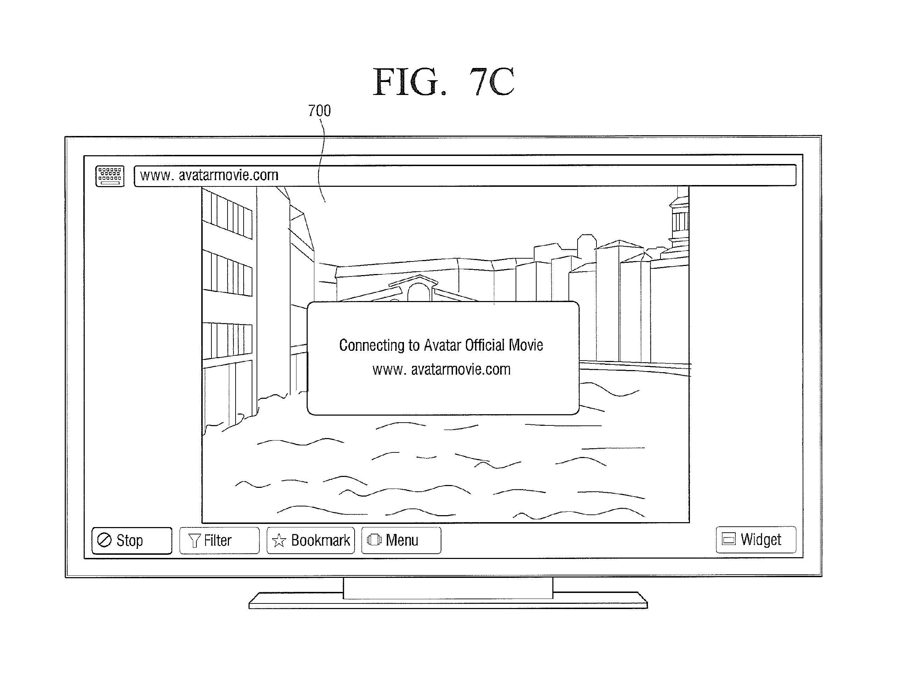

FIGS. 7A, 7B and 7C illustrate a process for adding the search result items to the third region 430 and selecting the intended search result item according to an exemplary embodiment.

The search window 400 displays the keyword 'Avatar' in the first region 410 as shown in FIG. 7A. The second region 420 displays the search results of the keyword 'Avatar'. In FIG. 7A, no temporary save item is set in the third region 430.

When the user selects the search result item #2 and the search result item #3 as the temporary save items, two temporary save icons 433 and 436 are added as shown in FIG. 7B. Herein, the first temporary save icon 433 corresponds to the search result item #2 and the second temporary save icon 436 corresponds to the search result item #3.

When the user manipulates a key #1 of the remote controller, the TV 100 receives the instruction to select the first search result item 425. Next, the TV 100 accesses the site corresponding to the first search result item 425. Thus, the TV 100 displays a web browser screen 700 accessing the site corresponding to the first search result item 425 as shown in FIG. 7C.

As above, the TV 100 assigns the numbers to the search result items. The user can select his/her intended search result item using the number key of the remote controller 175.

While the display apparatus is the TV in this exemplary embodiment, the invention is applicable to any display device with an Internet search function. For example, the display apparatus can be a mobile phone, a PMP, a MP3 player, and so forth.

In the light of the foregoing, when the user selects a particular item of the search result items displayed in the second region, the search service providing method and the display apparatus using the same display the selected search result item in the third region. Hence, the user can display and temporarily store his/her intended search result in a separate region (the third region). Therefore, the user can select and access the temporarily saved items displayed in the third region, without having to search the previous sites repeatedly.

While not restricted thereto, above-described exemplary embodiments can also be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, exemplary embodiments may be written as computer programs transmitted over a computer-readable transmission medium, such as a carrier wave, and received and implemented in general-use or special-purpose digital computers that execute the programs. Exemplarily, a general purpose processor may execute instructions embodied on a computer-readable storage medium to perform the functions of the controller 180.

Aspects of the disclosed exemplary embodiments may be implemented as an entirely hardware embodiment, an entirely software embodiment (including firmware, resident software, micro-code, etc.) or an embodiment combining software and hardware aspects.

The blocks in the flowchart or block diagrams may represent a module, segment, or portion of code, which comprises one or more executable instructions for implementing the specified logical functions. Furthermore, the functions noted in the block may occur out of the order noted in the figures. Further, each block of the block diagram and/or flowchart illustration, and combinations of blocks in the block diagrams and/or flowchart illustration, can be implemented by special purpose hardware-based systems that perform the specified functions or acts, or combinations of special purpose hardware and computer instructions.

While exemplary embodiments have been particularly shown and described, it will be understood by those skilled in the art that various changes in form and details may be made therein without departing from the scope of the invention, as defined by the appended claims.

## Claims

1. A method for providing a search service, the method comprising:
displaying a search window including a second region and a third region;
searching for information relating to an input search keyword;
displaying a preset number of search result items for the input search keyword in the second region; and
responsive to a particular item from among the search result items displayed in the second region being selected, displaying the selected item in the third region.

2. The method of claim 1, wherein the search window further comprises a first region where the search keyword is input.

3. The method of claim 1 or claim 2, further comprising:
storing information relating to the selected item displayed in the third region.

4. The method of claim 3, wherein the information relating to the selected item displayed in the third region comprises at least one of a search keyword, a site name, a site address, and a site description.

5. The method of claim 3 or claim 4, wherein the storing sustains the stored information relating to the selected item displayed in the third region until a power is turned off.

6. The method of any one of claims 1 to 5, wherein the selected item displayed in the third region is displayed together with the search keyword used for searching the selected item.

7. The method of any one of claims 1 to 6, further comprising:
assigning numbers to the search result items displayed in the second region respectively; and
responsive to the user inputting a number input command, selecting a search result item from among the search result items displayed in the second region corresponding to the input number.

8. The method of any one of claims 1 to 7, further comprising:
in response to the search window being initiated, displaying the search window comprising a keyword list.

9. The method of claim 8, wherein the keyword list is assigned numbers for respective keywords, and further comprising:
in response to the user inputting a number input command, selecting a keyword from the keyword list corresponding to the input number.

10. A display apparatus comprising:
a display unit which displays a search window including a second region and a third region; and
a controller which searches for information relating to an input search keyword, controls the display unit to display a preset number of search result items corresponding to the input search keyword in the second region, and controls the display unit to display a particular item from among the search result items in the third region in response to the particular item being selected from among the search result items displayed in the second region.

11. The display apparatus of claim 10, wherein the search window further comprises a first region where the search keyword is input.

12. The display apparatus of claim 10 or claim 11, wherein the controller controls to store information relating to the selected item displayed in the third region.

13. The display apparatus of claim 12, wherein the information relating to the selected item displayed in the third region comprises at least one of a search keyword, a site name, a site address, and a site description.

14. The display apparatus of claim 12 or claim 13, wherein the controller sustains the stored information relating to the selected item displayed in the third region until a power is switched off.

15. The display apparatus of any one of claims 10 to 14, wherein the controller controls to display the selected item displayed in the third region together with the search keyword used for searching the selected item.
